# EUROPÄISCHE PATENTSCHRIFT

(11) **EP 0 348 658 B1**
(45) Veröffentlichungstag und Bekanntmachung des Hinweises auf die Patenterteilung: **08.09.1993**
(21) Anmeldenummer: 89108894.0
(22) Anmeldetag: 18.05.1989
(51) Int. Cl.: G01L 9/06, G01L 1/18

(54) **Dickfilm Druck- oder Kraftsensor**
Thick film force or pressure transducer
Capteur de pression ou de force à couche épaisse

(30) Priorität: 28.05.1988 DE 3818189
(43) Veröffentlichungstag der Anmeldung: 03.01.1990
(73) Patentinhaber: ROBERT BOSCH GMBH, 70442 Stuttgart (DE)
(72) Erfinder: Schmid, Kurt, D-7257 Ditzingen (DE); Heinz, Rudolf, Dr., Dipl.-Ing., D-7253 Renningen (DE); Schoor, Ulrich, D-7000 Stuttgart 40 (DE); Wendel, Jürgen, D-7000 Stuttgart 31 (DE)

(56) Entgegenhaltungen:
- DE-A- 1 932 899
- GB-A- 2 187 887
- JOURNAL OF APPLIED PHYSICS, Band 54, Nr. 5, Mai 1983, Seiten 2824-2826, New York, US; Z. ROSENBERG et al.: "Calibration of commercial manganin stress gauges under static uniaxial strain conditions"

## Beschreibung

### Stand der Technik

Die Erfindung geht aus von einem Sensor zur Bestimmung des Drucks oder der Kraft nach der Gattung des Anspruchs 1. Bei derartigen bekannten Sensoren ist der Dickschichtwiderstand auf einem Träger aufgedruckt und das Krafteinleitungsteil mit Vorspannung z.B. aufgeklebt. Diese Sensoren sind nur bei niedrigeren Temperaturen einsetzbar. Ferner weisen sie eine ungleiche Lastverteilung auf, so daß im Anfangsbereich der Krafteinleitung kein linearer Verlauf der Kraft/Meßsignalkurve möglich ist. Eine Herstellung einer ebenen Oberfläche des Krafteinleitungsteils durch z.B. Läppen , um eine gleichmäßige Lastverteilung zu erreichen, ist mit einem hohen Arbeitsaufwand verbunden und deshalb kostenintensiv.

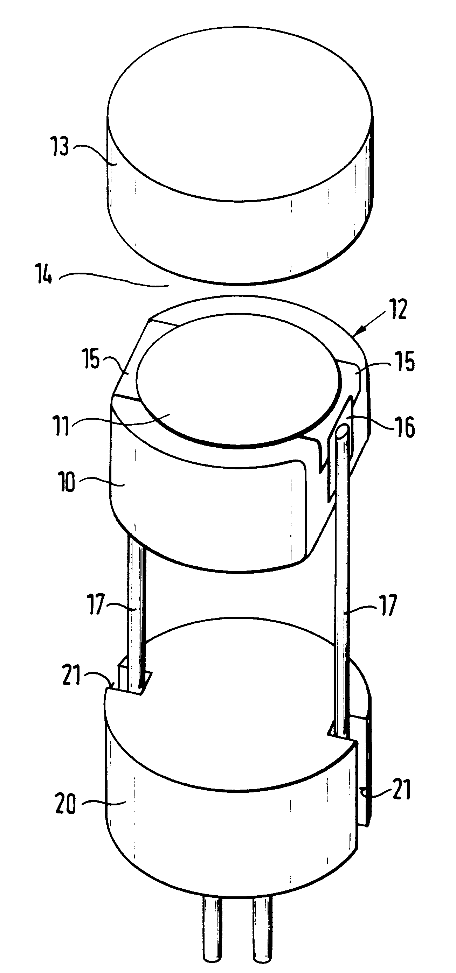

In der Schrift "Journal of applied physics", Band 54, Nr. 5, Mai 1983, Seiten 2824-2826, New York, US; Z. Rosenberg et al.: "Calibration of commercial manganin stress gauges under static uniaxial strain conditions" ist ein Druckaufnehmer beschrieben, dessen Widerstand zwischen zwei Krafteinleitungsteilen angeordnet ist. Wie der Seite 2825, rechte Spalte, Abs. 4, letzter Satz zu entnehmen ist, ist dieser Widerstand mit Hilfe eines Klebers an beiden Krafteinleitungsteilen befestigt. In der Figur 1 dieser Schrift ist nur die Klebeschicht zwischen den beiden Krafteinleitungsteilen dargestellt. Der Widerstand selbst hat keine Klebefunktion, wie es beim Anmeldungsgegenstand der Fall ist, wo der Dickschichtwiderstand den Träger und das Krafteinleitungsteil gleichzeitig mit verbindet. Vielmehr ist beim Stand der Technik der Widerstand in eine Epoxyd-Schicht eingebracht und diese mit zwei zusätzlichen Epoxyd-Klebern an den beiden Krafteinleitungsteilen befestigt.

Auch beim Meßwertaufnehmer nach der DE-A 19 32 899 gilt der oben herausgestellte Unterschied. Aus der Figur 5 ist zum Beispiel der Aufbau des Druckaufnehmers erkennbar. Der Widerstand 4 ist in eine elastische Schicht 5 aus Expoxydharz oder ähnlichem eingebracht. Dieser Aufbau wird als Meßelement 3 bezeichnet, und er ist zwischen den beiden Teilen 1 und 2 angeordnet. Erst durch die Schicht 5 oder mit einem Kleber, ein genauer Hinweis auf die Art der Befestigung ist nicht entnehmbar, ist das Meßelement 3 an den Teilen 1 und 2 befestigt.

### Vorteile der Erfindung

Der erfindungsgemäße Sensor mit den kennzeichnenden Merkmalen des Anspruchs 1 hat demgegenüber den Vorteil, daß das Kraftsignal auch im Anfangsbereich linear verläuft. Die Kraftverteilung über den gesamten Dickschichtwiderstand ist gleichmäßig. Das Krafteinleitungsteil ist ohne Vorspannung aufbringbar. Ferner wird bei den verwendeten Herstellungsverfahren (Ansprüche 5, 6) gleichzeitig das Krafteinleitungsteil fest mit dem Dickschichtwiderstand bzw. dem Träger verbunden. Der Sensor kann bei hohen Temperaturen eingesetzt werden.

Durch die in den Ansprüchen 2-4 aufgeführten Merkmale sind vorteilhafte Weiterbildungen des im Anspruch 1 angegebenen Sensors möglich.

### Zeichnung

Ein Ausführungsbeispiel der Erfindung ist in der Zeichnung dargestellt und in der nachfolgenden Beschreibung näher erläutert. Die einzige Figur zeigt einen Sensor in perspektivischer teilweise explodierter Darstellung.

### Beschreibung des Ausführungsbeispiels

In der Figur ist mit 10 der Träger eines Dickschichtwiderstands 11, eines Sensors 12 bezeichnet, der als Drucksensor oder als Kraftsensor verwendet werden kann. Der Dickschichtwiderstand 11 wird von einem Krafteinleitungsteil 13 abgedeckt. Sowohl der Träger 10 als auch das Krafteinleitungsteil 13 ist fest mit dem Dickschichtwiderstand 11 verbunden, wodurch eine gleichmäßige Kraftverteilung auf den Dickschichtwiderstand 11 möglich ist. Ferner entsteht am äußeren Rand des Trägers zwischen diesem und dem Krafteinleitungsteil 13 ein geringer Spalt 14, der der Dicke des Dickschichtwiderstands 11 entspricht.

Der Träger 10 und das Krafteinleitungsteil 13 bestehen aus einem elektrischen nicht leitenden Material, z.B. Keramik oder emailliertem Metall. Zur Ableitung des Meßsignals vom Dickschichtwiderstand 11 wird an zwei gegenüberliegenden Kanten des Trägers 10 eine elektrisch leitende Schicht 15, z.B. aus Goldresinat aufgedruckt, die auch auf die Seitenfläche des Trägers 10 reicht. Ferner ist an der Seitenfläche des Trägers 10 eine metallische Zone 16 aus z.B. Silberpaladium oder aktivem Lot aufgebracht, die mit der Schicht 15 überlappt. Auf diesen Zonen 16 ist das Ende der elektrischen Ableitdrähte 17 angeschlossen. Hierzu wird das Dickdrahtbonden, Punktschweißen, Löten oder mechanisches Andrücken verwendet. Der Träger 10 liegt zum thermischen Dehnungsausgleich auf einem Druckstück 20 auf, in dessen seitlichen Längsnuten 21 die Ableitdrähte 17 angeordnet sind. Der gesamte Sensor 12 kann in einem nicht dargestellten Gehäuse eingebaut sein oder frei im zu bestimmenden Medium hängen.

Bei der Herstellung des Sensors 12 wird auf dem Träger 10 ein Dickschichtwiderstand mittels bekanntem Tampondruck- oder Siebdruckverfahren aufgedruckt. Im noch weichen Zustand des Dickschichtwiderstands 11 wird das Krafteinleitungsteil 13 aufgesetzt und leicht angedrückt. Anschließend wird das Bauteil, bestehend aus dem Träger 10, dem Dickschichtwiderstand 11 und dem Krafteinleitungsteil 13 ausgehärtet. Dadurch entsteht ein fester, inniger Verbund sowohl des Trägers 10 als auch des Krafteinleitungsteils 13 mit dem Dickschichtwiderstand 11. Zur Verbesserung der Haftfestigkeit zwischen den Teilen kann auf die dem Träger 10 zugewandte Stirnseite des Krafteinleitungsteils 13 ein zweiter Dickschichtwiderstand aufgedruckt werden. Auch hier werden im noch weichen Zustand die Teile aufeinandergesetzt und anschließend ausgehärtet. Da hier zwei Dickschichtwiderstände, einer bereits ausgehärtet und einer im weichen Zustand, aufeinandergesetzt werden, ergibt sich ein besonders guter und fester Verbund und eine ebene Fläche zwischen dem Träger 10 und dem Krafteinleitungsteil 11, so daß eine gleichmäßige Krafteinleitung auf den Dickschichtwiderstand 11 möglich ist. Der Dickschichtwiderstand wirkt somit sowohl als Meßelement als auch als Verbindungselement zwischen dem Träger 10 und dem Krafteinleitungsteil 13.

## Patentansprüche

1. Sensor (12) zur Bestimmung des Drucks oder der Kraft mit zwischen einem Träger (10) und einem Krafteinleitungsteil (13) angeordnetem, als Meßelement wirkendem Dickschichtwiderstand (11), dadurch gekennzeichnet, daß der Dickschichtwiderstand (11) auch als Verbindungselement zwischen dem Träger (10) und dem Krafteinleitungsteil (13) wirkt.

2. Sensor nach Anspruch 1, dadurch gekennzeichnet, daß der Dickschichtwiderstand (11) aus einem auf dem Träger (10) angeordneten Dickschichtwiderstand und einem auf dem Krafteinleitungsteil (13) angeordneten Dickschichtwiderstand besteht.

3. Sensor nach Anspruch 1 oder 2, dadurch gekennzeichnet, daß der Träger (10) und das Krafteinleitungsteil (13) aus elektrisch nichtleitendem Material besteht und daß zwischen dem Dickschichtwiderstand (11) und den Ableitdrähten (17) Leiterbahnen (15, 16) angeordnet sind.

4. Sensor nach einem der Ansprüche 1 bis 3, dadurch gekennzeichnet, daß der Träger (10) und das Krafteinleitungsteil (13) aus emailliertem Metall bestehen.

5. Verfahren zur Herstellung eines Sensors (12) nach Anspruch 1, wobei eine Dickschichtwiderstandspaste auf einen Träger (10) aufgedruckt, ein Krafteinleitungsteil (13) ohne Vorspannung aufgesetzt und anschließend die Dickschichtwiderstandspaste ausgehärtet wird, so daß der Dickschichtwiderstand sowohl als Meßelement als auch als Verbindungselement zwischen dem Träger (10) und dem Krafteinleitungsteil (13) wirkt.

6. Verfahren zur Herstellung eines Sensors nach Anspruch (2), wobei eine Dickschichtwiderstandspaste auf ein Krafteinleitungsteil (13) aufgedruckt und ausgehärtet wird, eine Dickschichtwiderstandspaste auf einen Träger (10) aufgedruckt wird, oder umgekehrt, das Krafteinleitungsteil (13) mit dem ausgehärteten Dickschichtwiderstand ohne Vorspannung aufgesetzt und anschließend die Dickschichtwiderstandspaste ausgehärtet wird, so daß die zwei Dickschichtwiderstände sowohl als Meßelement als auch als Verbindungselement zwischen dem Träger (10) und dem Krafteinleitungsteil (13) wirken.

## Claims

1. Sensor (12) for the determination of pressure or of force, having a thick-film resistor (11) which is disposed between a carrier (10) and a force infeed part (13) and which acts as measuring element, characterised in that the thick-film resistor (11) also acts as connecting element between the carrier (10) and the force infeed part (13).

2. Sensor according to Claim 1, characterised in that the thick-film resistor (11) comprises a thick-film resistor disposed on the carrier (10) and a thick-film resistor disposed on the force infeed part (13).

3. Sensor according to Claim 1 or 2, characterised in that the carrier (10) and the force infeed part (13) are composed of electrically non-conductive material, and in that conductor tracks (15, 16) are disposed between the thick-film resistor (11) and the pick-off wires (17).

4. Sensor according to one of Claims 1 to 3, characterised in that the carrier (10) and the force infeed part (13) are composed of enamelled metal.

5. Process for the manufacture of a sensor (12) according to Claim 1, wherein a thick-film resistor paste is pressed onto a carrier (10), a force infeed part (13) is applied without prestress and subsequently the thickfilm resistor paste is cured, so that the thick-film resistor acts both as a measuring element and as a connecting element between the carrier (10) and the force infeed part (13).

6. Process for the manufacture of a sensor according to Claim (2), wherein a thick-film resistor paste is pressed onto a force infeed part (13) and is cured, a thick-film resistor paste is pressed onto a carrier (10), or conversely the force infeed part (13) with the cured thick-film resistor is applied without prestress and subsequently the thick-film resistor paste is cured, so that the two thick-film resistors act both as a measuring element and as a connecting element between the carrier (10) and the force infeed part (13).

## Revendications

1. Capteur (12) de mesure de pression ou de force, comportant une résistance en couche épaisse (11) intercalée entre un support (10) et un transmetteur de force (13), caractérisé en ce que la résistance (11) sert d'élément de liaison à la fois entre le support (10) et le transmetteur (13).

2. Capteur selon la revendication 1, caractérisé en ce que la résistance en couche épaisse (11) est constituée d'une résistance en couche épaisse déposée sur le support (10) et d'une résistance en couche épaisse déposée sur le transmetteur (13).

3. Capteur selon la revendication 1 ou 2, caractérisé en ce que le support (10) et le transmetteur (13) sont faits d'un matériau isolant électrique, des pistes conductrices (13, 16) étant prévues entre la résistance en couche épaisse (11) et les fils de sortie (17).

4. Capteur selon une des revendications 1 à 3, caractérisé en ce que le support (10) et le transmetteur (13) sont en métal émaillé.

5. Procédé de fabrication d'un capteur (12) selon la revendication 1, caractérisé en ce qu'une pâte pour résistance en couche épaisse est déposée sur un support (10) puis recouverte sans subir de précontrainte par un élément transmetteur de force (13) et enfin durcie, de sorte que cette couche joue à la fois le rôle d'organe de mesure et d'organe de liaison entre le support (10) et le transmetteur de force (13).

6. Procédé de fabrication d'un capteur selon la revendication 2, caractérisé en ce qu'une pâte pour résistance en couche épaisse est déposée par impression sur un élément transmetteur de force (13), puis durcie, que de même une pâte pour résistance en couche épaisse est déposée par impression sur un support (10), ou inversement, l'élément transmetteur de force (13) portant la résistance en couche épaisse durcie étant appliquée sur la résistance sans précontrainte dans celle-ci qui est ensuite durcie, de sorte que les deux résistances en couche épaisse jouent à la fois le rôle d'organe de mesure et d'organe de liaison entre le support (10) et l'élément transmetteur de force (13).
